# EUROPÄISCHE PATENTSCHRIFT

(11) **EP 1 690 601 B1**
(45) Veröffentlichungstag und Bekanntmachung des Hinweises auf die Patenterteilung: **26.03.2008**
(21) Anmeldenummer: 06405009.9
(22) Anmeldetag: 12.01.2006
(51) Int. Cl.: B05B 7/20, B05B 7/22, F16L 25/01, F16L 39/02

(54) **Vorrichtung zum thermischen Spritzen**
Thermal spray device
Dispositif de revêtement thermique

(30) Priorität: 11.02.2005 EP 05405185
(43) Veröffentlichungstag der Anmeldung: 16.08.2006
(73) Patentinhaber: Sulzer Metco AG, 5610 Wohlen (CH)
(72) Erfinder: Müller, Markus, 5606 Dintikon (CH)
(74) Vertreter: Sulzer Management AG

(56) Entgegenhaltungen:
- DE-U1- 8 519 228
- US-A1- 2003 233 979
- US-A1- 2005 242 581
- US-B1- 6 354 521
- US-B1- 6 572 029

## Beschreibung

Die Erfindung betrifft eine Vorrichtung zum thermischen Spritzen gemäss dem Oberbegriff des unabhängigen Anspruchs 1.

Das thermische Spritzen hat sowohl zur Beschichtung von Einzelteilen als auch in der industriellen Serienfertigung seinen festen Platz. Insbesondere wenn kompliziert geformte Oberflächen in grosser Stückzahl beschichtet werden sollen, kommen verbreitet Beschichtungsanlagen zum Einsatz, bei welchen programmgesteuerte Roboter eine Spritzpistole nach einem vorgegebenen Bewegungsprogramm vollautomatisch führen und so die Beschichtung der Oberflächen verschiedenster Bauteile übernehmen. Solche Anlagen verfügen in der Regel über eine Versorgungseinheit, die elektrische Energie, Betriebsgase wie Sauerstoff, Stickstoff, Edelgase oder andere Gase, sowie Kühlwasser und viele andere für den Betrieb der Spritzpistole notwendigen Betriebsmittel zu Verfügung stellen. Die Spritzpistole ist dann über eine Versorgungsleitung mit der Versorgungseinheit verbunden, wobei die Versorgungsleitung dann, je nach Anforderung, entsprechende elektrische Leitungen, Kühlleitungen, Gasdruckleitungen usw. umfassen.

In speziellen Fällen sind in oder an der Spritzpistole, oder zum Beispiel an der Robotereinheit zusätzlich noch Sensoren zur Überwachung des Spritzvorgangs vorgesehen, oder Steuer- bzw. Regelelemente, wie zum Beispiel Temperatursensoren, Durchflussmesser, Schrittmotoren oder hydraulische oder pneumatische Steuer- und / oder Regeleinheiten vorgesehen, die ebenfalls über entsprechende Versorgungsleitungen entweder mit der Versorgungseinheit oder mit weiteren Ansteuereinheiten verbunden sein müssen.
So ist in der US-B1-6 354 521 eine Vorrichtung zum thermischen Spritzen, umfassend eine Spritzpistole mit einem Brenner offenbart, der über eine Zuleitung ein Betriebsmittel zuführbar ist, und ein Basisteil, das über eine Versorgungsleitung mit einer Versorgungseinheit für das Betriebsmittel in Verbindung steht. Dabei ist eine lösbare Kupplungseinrichtung vorgesehen, wobei die Zuleitung ein Adapterteil umfasst, so dass das Adapterteil mittels der lösbaren Kupplungseinrichtung mit dem Basisteil verbindbar ist.
Dabei können die zuvor schematisch erläuterten Spritzvorrichtungen mit ganz verschiedene Typen von Spritzpistolen ausgerüstet sein, je nach dem welches Spritzverfahren zum Einsatz kommen soll. So können verschiedene Typen von Plasmabrennern vorgesehen sein, z.B. die Sulzer Metco Plasma Brenner vom Typ Triplex II, eine F4-MB Plasma Spray Gun, eine Plasma Spray Gun vom Typ 9MB oder 3 MB oder eine "Internal" Plasma Spray Gun vom Typ SM-F300 oder SM-F100 Connex, die besonders zur Beschichtung innerer Oberflächen wie Zylinderbohrungen geeignet ist, oder aber auch Brenner anderer Hersteller, wie z.B. der F6-Brenner von GTV.
Aber selbstverständlich kommen nicht nur Plasmaspritzpistolen zum Einsatz. Die zuvor beschriebenen Vorrichtungen zum thermischen Spritzen können unter anderem auch mit Spritzpistolen zum Flammspritzen mit Drähten oder Pulver, Pistolen zum Flammschockspritzen oder Hochgeschwindigkeits Flammspritzen (HVOF) oder mit Spritzpistolen zum Lichtbogenspritzen ausgerüstet sein. Dabei ist diese Liste der möglichen Typen von Spritzpistolen keineswegs abschliessend. Vielmehr können alle möglichen Arten von Spritzpistolen in solchen Anlagen vorteilhaft zum Einsatz kommen.
Die spezielle Auswahl des Spritzverfahrens hängt dabei von verschiedenen Faktoren ab. Unter anderem von der Art des Basismaterials des Werkstücks, das beschichtet werden soll. Von der Art des aufzuspritzenden Materials bzw. der geforderten Funktionen an die zu spritzende Schicht (z.B. korrosionsfeste Schicht, Wärmedämmschicht, dekorative Schicht, Schicht gegen mechanischen Verschleiss, Schichten mit guten tribologischen Eigenschaften, Schutzschicht gegen chemische Einwirkungen usw.). Je nach dem wird das ein oder andere Spritzverfahren besondere Vorteile bieten.

Nicht selten ist es auch so, dass ein Werkstück zum Beispiel mit mehreren übereinander oder nebeneinander liegenden Schichten unterschiedlicher Art versehen werden muss, die beispielsweise aus verschiedenen Materialien bestehen müssen und / oder nach verschiedenen Verfahren gespritzt werden müssen, da die nach verschiedenen Verfahren gespritzten Oberflächen, auch bei Verwendung identischer Spritzmaterialien, verschiedene Eigenschaften haben können.

Die verschiedenen Spritzverfahren, sowie die dazu verwendeten Spritzpistolen sind an sich im Stand der Technik seit langem bestens bekannt und brauchen daher im Detail an dieser Stelle nicht näher diskutiert zu werden. Einen recht umfassenden Überblick zu Spritzverfahren und entsprechenden Spritzvorrichtungen bzw. Spritzpistolen, gibt zum Beispiel K. Smolka in "Thermisches Spritzen, Ein Leitfaden für den Praktiker", Deutscher Verlag für Schweisstechnik, 1985.

Obwohl, wie bereits erwähnt, die beschriebenen Vorrichtungen zum thermischen Spritzen mit Komponenten wie Roboter zum Führen der Spritzpistolen, Versorgungseinrichtung zur Versorgung der Spritzpistolen mit Betriebsmitteln (unter dem Begriff der Betriebsmittel soll im Rahmen dieser Anmeldung alles verstanden werden, was zum ordnungsgemässen Betrieb einer Spritzpistole notwendig ist, also neben Betriebsgasen, Spritzpulvern oder Spritzdrähten, auch Kühlmittel, wie Kühlwasser oder elektrische Energie oder was auch immer an Betriebsmitteln zum Betrieb der Spritzpistole notwendig ist), oder Steuer- und Regeleinheiten seit langem wohlbekannt sind, und auch in der Serien- und Massenfertigung fest etabliert sind, ist der Wechsel der Spritzpistole oder des Brenners der Spritzpistole bisher sehr aufwendig, da beim Wechsel der Spritzpistole oder des Brenners die Versorgungsleitung, die häufig aus mehreren Bestandteilen, wie elektrischer Zuleitung, Kühlwasserzuleitung, einer Versorgungsleitung für Betriebsgase usw. besteht, umständlich demontiert werden muss.

Hier bereiten insbesondere die Brennerschläuche, z.B. bei Plasmabrennern, Probleme, die in der Regel als innen gekühlte elektrische Versorgungsleitungen ausgestaltet sind. Einerseits müssen die hohen elektrischen Betriebsströme (typischerweise ca. 500 A - 700 A an 40V - 60 V Betriebsspannung) sicher, dass heisst insbesondere überschlagsfrei und gut isoliert zum Plasmabrenner transportiert werden und andererseits müssen die stromführenden innen gekühlten Leitungen ausreichend gegen das unter relativ hohem Druck stehende Kühlwasser (der Wasserdruck in der Leitung kann durchaus 16 bar und mehr betragen) abgedichtet sein. Zudem müssen sehr häufig Betriebsgase, insbesondere auch Edelgase unter mehr oder weniger hohem Druck zugeführt werden.

Daher werden bei den bekannten Vorrichtungen zum thermischen Spritzen alle diese Versorgungsleitungen einzeln, unter Verwendung unterschiedlicher Anschlüsse, mit verschiedenen Dichtungseinrichtungen usw. an die Spritzpistole angeschlossen. Die Folge ist, dass die verschiedenen Versorgungsleitungen beim Wechseln der Spritzpistole, oder beim Austausch der Versorgungseinheit, die die verschiedenen Betriebsmittel bereitstellt, sehr zeitaufwendig und unter Verwendung verschiedener Werkzeuge demontiert und wieder angeschlossen werden müssen.

Ein weiteres Problem besteht darin, dass die bekannten Vorrichtungen zum thermischen Spritzen in Bezug auf die einsetzbaren Typen von Spritzpistolen und / oder Versorgungseinrichtungen, sehr unflexibel sind, so dass ohne aufwändige Umbauarbeiten bei einer gegeben Versorgungseinheit immer nur ein und derselbe Spritzpistolentyp verwendbar ist, da die entsprechenden Anschlussstücke mit Dichtungen usw. je nach verwendeter Spritzpistole und /oder Versorgungseinheit verschieden sind, so dass die Anschlussstücke der Versorgungsleitungen an den Schnittstellen zwischen Versorgungseinheit und Spritzpistole nicht aufeinander passen.

Das ist zum Beispiel dann besonders problematisch, wenn die Spritzpistole, zum Beispiel zu Wartungszwecken häufig ausgetauscht werden muss, oder wenn nacheinander auf ein und dasselbe Werkstück verschiedene Schichten mit ganz verschiedenen Spritzmethoden aufgetragen werden sollen. Soll zum Beispiel eine erste Schicht auf ein Werkstück mittels Triplex Brenners (Sulzer Metco) aufgetragen werden und darauf eine zweite Schicht durch Verwendung eines F6-Brenners von GTV mittels Plasmaspritzen aufgespritzt werden, so müssen entweder zwei Vorrichtungen zum thermischen Spritzen bereitgestellt werden und das Werkstück nach dem Beschichten mit dem Triplex-Brenner zum weiteren Beschichten in die Plasmaspritzvorrichtung umgebaut werden, oder der Triplex-Brenner muss gegen eine F6-Plasmaspritzpistole ausgetauscht werden, was häufig entweder gar nicht möglich ist, oder mit einem massiven und nicht zu vertretenden Aufwand an Umbaumassmahmen bewerkstelligt werden muss.
Aufgabe der Erfindung ist es daher eine Vorrichtung zum Plasmaspritzen vorzuschlagen, die es gestattet, ohne grossen Aufwand zwischen verschiedenen Spritzpistolen und oder Versorgungseinrichtungen, gleichen oder verschiedenen Typs zu wechseln und die ein Höchstmass an Flexibiltät in die Bezug auf die verwendbaren Typen von Spritzpistolen und Spritzverfahren gewährleistet.
Die diese Aufgaben lösenden Gegenstände der Erfindung sind durch die Merkmale des unabhängigen Anspruchs 1 gekennzeichnet.
Die abhängigen Ansprüche beziehen sich auf besonders vorteilhafte Ausführungsformen der Erfindung.
Die Erfindung betrifft somit eine Vorrichtung zum thermischen Spritzen, umfassend eine Spritzpistole mit einem Brenner, wobei der Spritzpistole über eine Zuleitung ein Betriebsmittel zuführbar ist, und ein Basisteil, das über eine Versorgungsleitung mit einer Versorgungseinheit für das Betriebsmittel in Verbindung steht. Dabei ist eine lösbare Kupplungseinrichtung vorgesehen, wobei die Zuleitung ein Adapterteil umfasst, so dass das Adapterteil mittels der lösbaren Kupplungseinrichtung mit dem Basisteil verbindbar ist. Erfindungsgemäss umfasst die Zuleitung und / oder die Versorgungsleitung eine elektrische Zuleitung zur Versorgung der Spritzpistole mit elektrischer Energie und eine Kühlleitung zur Versorgung der Spritzpistole mit einem Kühlmittel.
Wesentlich für die Erfindung ist, dass in der Verbindungsleitung zwischen der Versorgungseinheit und der Spritzpistole ein zweiteiliges Verbindungsstück vorgesehen ist, dass einerseits ein Adapterteil umfasst, das über die Zuleitung mit der Spritzpistole verbunden ist, und andererseits ein Basisteil umfasst, das über die Versorgungsleitung mit der Versorgungseinrichtung in Verbindung steht, und das Adapterteil mittels der lösbaren Kupplungseinrichtung mit dem Basisteil verbindbar ist, wobei erfindungsgemäss die Zuleitung und / oder die Versorgungsleitung eine elektrische Zuleitung zur Versorgung der Spritzpistole mit elektrischer Energie und eine Kühlleitung zur Versorgung der Spritzpistole mit einem Kühlmittel umfasst.
Dass das Basisteil mit dem Adapterteil mittels der lösbaren Kupplungseinrichtung verbindbar ist, bedeutet, dass das Adapterteil und das Basisteil so ausgestaltet sind und derart in Bezug aufeinander angeordnet werden können, dass sie mit Hilfe der Kupplungseinrichtung so miteinander verbunden werden können, dass die Versorgungsleitung derart mit der Zuleitung über das Adapterteil und das Basisteil in Verbindung bringbar ist, dass das Betriebsmittel, also z.B. Betriebsgase, elektrischer Strom, Kühlmittel usw. zwischen Versorgungsleitung und Zuleitung sicher ausgetauscht werden können, ohne dass beim Übergang zwischen Versorgungsleitung und Zuleitung ein Verlust von Betriebsmitteln, elektrische Kurzschlüsse oder Undichtigkeiten irgendwelcher Art im weitesten Sinne auftreten.
Der besondere Vorteil der erfindungsgemässen Vorrichtung zum thermischen Spritzen besteht darin, dass, wenn eine beliebige Basiseinheit mit einer Versorgungsleitung und dem erfindungsgemässen Basisteil ausgerüstet wird, z.B. zwei verschiedene oder gleiche Typen von Spritzpistolen gegeneinander ausgetauscht werden müssen, einfach nur jeweils mit einem erfindungsgemässen Adapterstück an ihrer Zuleitung ausgerüstet werden müssen. Dadurch ist die Kompatibiltät der Spritzvorrichtung mit den zwei gleichen oder verschiedenen Spritzpistolen automatisch gewährleistet, da das Adapterstück und das Basisteil mittels der lösbaren Kupplungseinrichtung verbindbar sind.
In einem besonders bevorzugten und für die Praxis wichtigen Ausführungsbeispiel, ist die Einheit aus Basisteil mit Adapterteil und lösbarer Kupplungseinrichtung als Schnelltrenn-Adapter ausgeführt, wobei die lösbare Kupplungseinrichtung ein Exzenterheber, ein Bajonettverschluss oder eine Verschraubung, z.B. eine Verschraubung mit Überwurfmutter oder einer Verschraubung, die das Basisteil mit dem Adapterteil durch eine Bohrung verbindet, wobei beispielsweise im Adapterteil und / oder im Basisteil eine Bohrung mit Gewinde vorgesehen sein kann oder aber die Verschraubung durch eine durchgehende Schraube mit Feststellmutter realisiert sein kann.

Bei allen diesen Ausführungsbeispielen ist ein schnelles und völlig problemloses Verbinden bzw. Trennen des Adapterteils vom Basisteil gewährleistet, weil entweder überhaupt kein Werkzeug, wie im Falle eines Exzenterhebers, eines Bajonettverschlusses oder einer Überwurfmutter notwendig ist, oder für jeden Brennertyp, der entsprechend der Erfindung mit einem Adapterteil ausgerüstet ist, nur ein einziges genormtes Werkzeug notwendig ist. Ausserdem können alle einzelnen Teile der Zuleitung (elektrische Zuleitung, Kühlwasser, Betriebsgase, Zuleitungen für Spritzwerkstoffe usw.) mit einer einzigen Adaptervorrichtung aus Adapterteil und Basisteil in einem einzigen Arbeitsschritt gleichzeitig angeschlossen bzw. getrennt werden. Es versteht sich, dass es in speziellen Fällen zweckmässig sein kann, in einer einzigen Vorrichtung zum thermischen Spritzen mehrere Adaptervorrichtungen aus Adapterteil und Basisteil parallel einzusetzen.

In einem für die Praxis besonders bedeutenden Ausführungsbeispiel ist der Brenner ein Plasmabrenner. Sehr häufig ist es der Fall, dass zum Beispiel der Plasmabrenner zu Wartungszwecken gewechselt werden muss, oder in ein und derselben Vorrichtung zum thermischen Spritzen mit verschiedenen Typen von Plasmabrennern gearbeitet werden muss.

Dabei kann in der erfindungsgemässen Vorrichtung zum thermischen Spritzen selbstverständlich im Prinzip jede Art von Spritzpistole verwendet werden, wenn die Spritzpistole an der Zuleitung nur mit einem Adapterteil versehen ist. So kann die Spritzpistole zum Beispiel eine Spritzpistole zum Flammspritzen, zum Hochgeschwindigkeits Flammspritzen, zum Lichtbogenspritzen oder zum Flammschockspritzen oder jede andere thermische Spritzpistole sein.

Dabei kann, wie bereits erwähnt, die Zuleitung zwischen Adapterteil und Spritzpistole und / oder die Versorgungsleitung zwischen Basisteil und Versorgungseinrichtung, eine elektrische Zuleitung zur Versorgung der Spritzpistole mit elektrischer Energie umfassen.

Weiterhin kann die Zuleitung und / oder die Versorgungsleitung eine Kühlleitung zur Versorgung der Spritzpistole mit einem Kühlmittel, eine Gaszuführung zur Versorgung der Spritzpistole mit einem Betriebsgas, eine Spritzmittelzuführung zur Zuführung von Spritzpulver und/ oder einem Spritzdraht, oder weitere Zuleitungen und / oder Versorgungsleitungen zur Versorgung der Spritzpistole mit weiteren Betriebsmitteln umfassen.

Bei einem speziellen Ausführungsbeispiel ist ein Sensor zur Messung eines Betriebsparameters und / oder ein Ansteuerelement zur Steuerung und / oder Regelung eines Betriebsparameters an der Vorrichtung zum thermischen Spritzen, beispielsweise in oder an der Spritzpistole oder an anderer geeigneter Stelle an der Vorrichtung zum thermischen Spritzen vorgesehen.

Dazu kann die Zuleitung und / oder die Versorgungsleitung zusätzlich eine Sensorleitung für den Sensor und / oder eine Ansteuerleitung für das Ansteuerelement umfassen.

Es versteht sich, dass die zuvor genannten und schematisch beschriebenen Ausführungsbeispiele von erfindungsgemässen Vorrichtungen zum thermischen Spritzen keinesfalls eine abschliessende Aufzählung darstellen und vielmehr stellvertretend für weitere Ausführungsbeispiele stehen. Insbesondere kann jede sinnvolle Kombination der zuvor geschilderten Beispiel in speziellen Fällen vorteilhaft in der Praxis realisiert sein und eingesetzt werden.

Im folgenden wird die Erfindung an Hand der schematischen Zeichnung näher erläutert. Es zeigen:
- Fig. 1: eine erfindungsgemässe Vorrichtung zum thermischen Spritzen;
- Fig. 2: ein Basisteil mit Exzenterheber und Adapterteil gemäss Fig. 1;
- Fig. 3a: ein Basisteil;
- Fig. 3b: ein Adapterteil;
- Fig. 4: einen Längsschnitt gemäss Fig. 2.

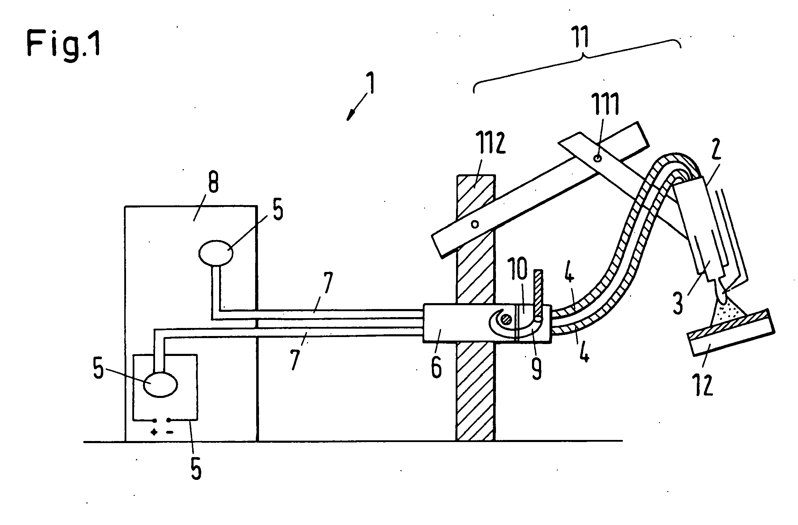

Fig. 1 zeigt in einer schematischen Darstellung eine erfindungsgemässe Vorrichtung zum thermischen Spritzen, die im folgenden gesamthaft mit dem Bezugszeichen 1 bezeichnet wird, und die für die Praxis typischen und wesentlichen Komponenten aufweist.

Die erfindungsgemässe Vorrichtung zum thermischen Spritzen 1 umfasst eine Versorgungseinheit 8, eine Robotereinheit 11 mit Roboterarmen 111, an welchen eine Spritzpistole 2 befestigt ist. Die Spritzpistole 2 ist durch Bewegung der Roboterarme 111 frei positionierbar, so dass ein Werkstück 12 mit der Spritzpistole 2 in an sich bekannter Art und Weise nach einem vorgebbaren Schema beschichtbar ist. Die Robotereinheit 11 kann zur Steuerung und / oder Regelung mit einer hier nicht gezeigten Ansteuereinheit über eine Signalleitung signalverbunden sein. Selbstverständlich ist es auch möglich, dass die Ansteuereinheit für die Robotereinheit 11 in der Versorgungseinheit 8 integriert ist, so dass die Signalleitung in die Versorgungsleitung 7, die das Basisteil 6 mit der Versorgungseinheit 8 verbindet und / oder in die Zuleitung 4, die das Adapterteil 10 mit der Spritzpistole 2 verbindet, integriert ist.

Im Ausführungsbeispiel der Fig. 1 ist das Basisteil mit einem Gestell 112 der Robotereinheit 11 fest verbunden. Es versteht sich von selbst, dass das Basisteil auch an einem separaten Tragegestell, an einer Wand einer Beschichtungskabine oder an einer anderen geeigneten Stelle befestigt sein kann. Ausserdem ist klar, dass das erfindungsgemässe Kupplungsstück aus Basisteil 6 und Adapterteil 10 auch in Vorrichtungen zum thermischen Spritzen vorteilhaft einsetzbar ist, die nicht über eine Roboterführung verfügen, sondern in denen die Spritzpistole 2 stationär angebracht ist. Das Adapterteil 10 ist mit einer lösbaren Kupplungseinrichtung 9 mit dem Basisteil 6 verbunden, wobei die Kupplungseinrichtung 9 im vorliegenden Beispiel als Exzenterheber 9 ausgestaltet ist. Wenn die Spritzpistole 2 ausgewechselt werden muss, kann das Adapterteil 10, das nicht direkt mit dem Gestell 112 von Werkzeug, durch Lösen des Exzenterhebers 9 vom Basisteil 6 getrennt werden.

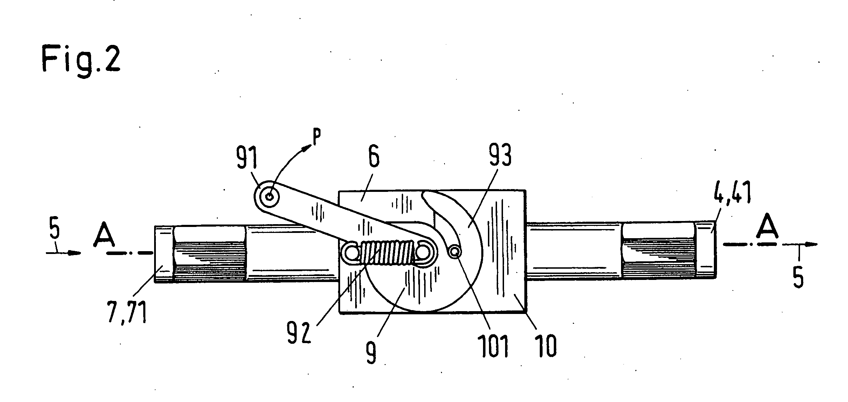

In Fig. 2 ist ein Basisteil mit Exzenterheber und Adapterteil gemäss Fig. 1 detaillierter dargestellt. Der Exzenterheber ist in an sich bekannter Weise um eine Befestigungsachse am Basisteil 9 drehbar angeordnet. Exzenterheber, z.B. in der Funktion als Schnellverschluss, sind an sich bekannt, so dass auf deren allgemeine Funktion hier nicht eingegangen werden muss. Wird der Exzenterheber mittels des Griffs 91 in Richtung des Pfeils P bewegt, so wird die Vorspannfeder 92, die durch die Verklemmung der Exzenterscheibe 93 mit dem Haltestift 101, der am Adapterteil 10 fixiert ist, erheblich vorgespannt ist, entspannt und die Exzenterscheibe 93 gibt den Haltestift 101 frei, so dass das Adapterteil 10, das bei gespannter Vorspannfeder 92 mit erheblicher Kraft gegen das Basisteil 6 gepresst wird, vom Basisteil 6 gelöst wird, so dass durch Bewegung des Griffs 91 in Richtung des Pfeils P das Adapterteil 10 auf besonders einfache Weise, schnell und ohne irgendwelches Werkzeug vom Basisteil 6 getrennt werden kann.

Es versteht sich, dass die in Fig. 2 dargestellte Ausführungsform eines Exzenterhebers 9 nur schematisch ist und stellvertretend für alle möglichen konkreten Ausführungsformen eines Schnelltrennadapters 9 steht. Ausserdem ist es selbstverständlich möglich, dass der Haltestift 101 am Basisteil 6, und der Exzenterheber 9 mit Vorspannfeder 92 am Adapterteil 10 vorgesehen ist.

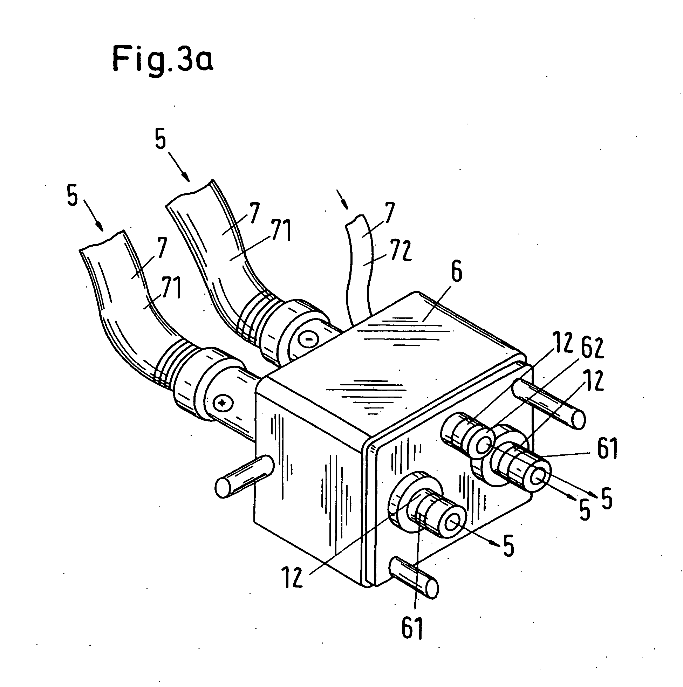

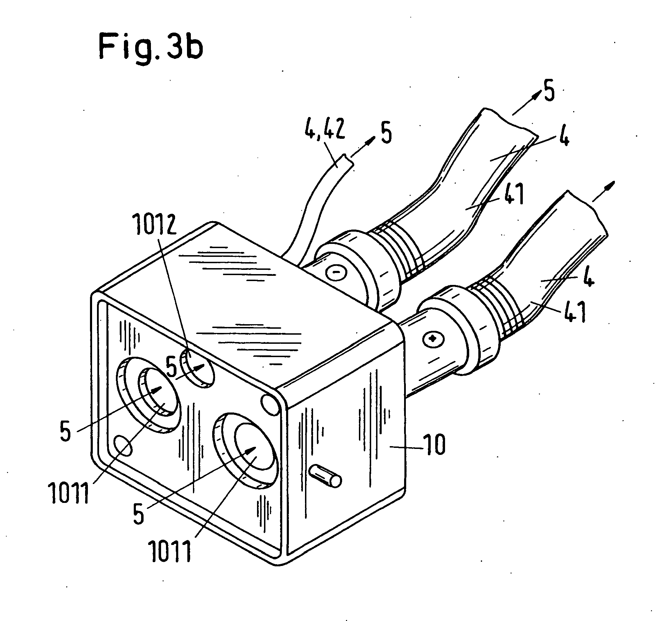

In Fig 3a ist ein spezielles Ausführungsbeispiel für ein Basisteil 6, und in Fig. 3b ein dazu korrespondierendes Adapterteil 10 dargestellt, wobei aus Gründen der Übersichtlichkeit auf die Darstellung der lösbaren Kupplungseinrichtung 9 verzichtet wurde.

Das Basisteil 6 gemäss Fig. 3a ist mit drei Versorgungsleitungen 7 mit einer hier nicht dargestellten Versorgungseinheit 8 verbunden. Die drei korrespondierenden Zuleitungen 4 des Adapterteils 10 der Fig. 3b sind entsprechend mit einer nicht dargestellten Spritzpistole 2 verbunden. Die Versorgungsleitungen 71, und entsprechend die Zuleitungen 41 sind in an sich bekannter Weise als innengekühlte elektrische Leitungen ausgeführt, die im Betriebszustand zum Beispiel von Kühlwasser 5 durchströmt werden, und die Spritzpistole so einerseits mit elektrischer Energie 5 und andererseits mit Kühlwasser versorgen. Die Versorgungsleitung 72 und die korrespondierende Zuleitung 42 ist eine Gaszuführung, so dass die Spritzpistole 2, die zum Beispiel ein Plasmabrenner 2 sein kann, im Betriebszustand mit einem Betriebsgas 5, beispielsweise mit einem Edelgas 5 versorgt werden kann.

Das Basisteil 6 weist dabei entsprechend den drei Versorgungsleitungen 7 drei Verbindungsstutzen 61, 62 auf, die jeweils in direkter Verbindung zu den Versorgungsleitungen 71, 72 stehen und somit jeweils eine direkte Verlängerung der Versorgungsleitungen 71, 72, bilden.

Entsprechend weist das Adapterteil 10 drei zu den Verbindungsstutzen 61, 62 korrespondierende Verbindungsöffnungen 1011, 1012 auf, die jeweils in direkter Verbindung zu den Zuleitungen 41, 42 stehen.

Zur Verbindung des Adapterteils 10 mit dem Basisteil 6 nehmen die Verbindungsöffnungen 1011, 1012 die entsprechenden Verbindungsstutzen 61, 62 auf und das Adapterteil 10 kann dann zur dichtenden Verbindung mit dem Basisteil 6 zum Beispiel, wie in Fig. 2 genauer dargestellt, mit einer lösbaren Kupplungseinrichtung 9 wirkfest verbunden werden.

Die Dichtungsringe 12 an den Verbindungsstutzen 61, 62, dichten dabei derart gegen das Innere der Verbindungsöffnungen 1011, 1012 ab, dass die durch die Verbindungsstutzen 61, 62 in das Adapterteil 10 strömende Betriebsmittel 5 nicht im Inneren des Adapterteils 10 austreten und so ohne Verlust in die Zuleitungen 41, 42 im Betriebszustand weitergeleitet werden.

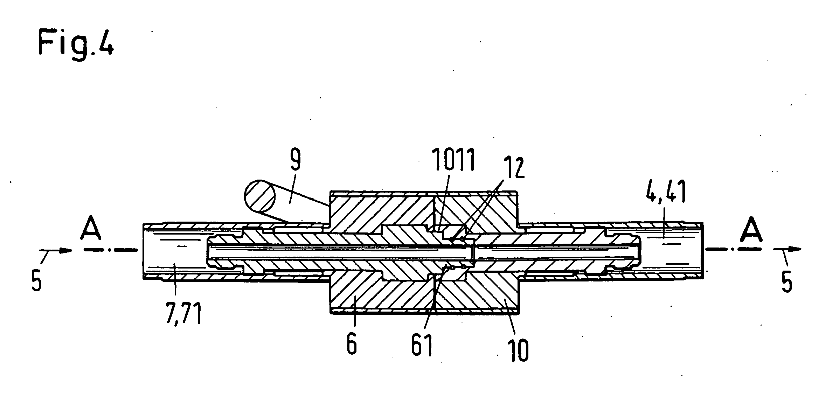

In Fig. 4 ist schliesslich ein Längsschnitt entlang einer Längsachse A-A gemäss Fig. 2 dargestellt, die fluchtend mit der Längsachse der Versorgunsleitung 7 und der Zuleitung 4 liegt. Das Adapterteil 10 ist mittels einer lösbaren Kupplungseinrichtung 9 in Form eines Exzenterhebers 9 mit dem Basisteil 6 verbunden.

Das Basisteil 6 ist mit der Versorgungsleitung 7, 71 mit einer hier nicht dargestellten Versorgungseinheit 8 verbunden; die korrespondierende Zuleitung 4, 41 des Adapterteils 10 ist entsprechend mit einer nicht dargestellten Spritzpistole 2 verbunden. Die hier exemplarisch dargestellte Versorgungsleitung 71, und entsprechend die Zuleitung 41 sind in an sich bekannter Weise als innengekühlte elektrische Leitungen ausgeführt, die im Betriebszustand zum Beispiel von Kühlwasser 5 durchströmt werden, und die Spritzpistole 2 so einerseits mit elektrischer Energie 5 und andererseits mit Kühlwasser 5 versorgen.

Das Basisteil 6 weist dabei entsprechend der drei Versorgungsleitung 71 einen Verbindungsstutzen 61 auf, der in direkter Verbindung zu der Versorgungsleitung 71 steht und somit jeweils eine direkte Verlängerung der Versorgungsleitung 71 bildet.

Entsprechend weist das Adapterteil 10 eine zu dem Verbindungsstutzen 61 korrespondierende Verbindungsöffnung 1011 auf, die in direkter Verbindung zu der Zuleitung 41 steht. Zur Verbindung des Adapterteils 10 mit dem Basisteil 6 nimmt die Verbindungsöffnung 1011 den entsprechenden Verbindungsstutzen 61 auf und das Adapterteil 10 ist zur dichtenden Verbindung mit dem Basisteil 6 mit der lösbaren Kupplungseinrichtung 9 wirkfest verbunden.

Die Dichtungsringe 12, hier beispielsweise, aber nicht notwendig, zwei Dichtringe 12 am Verbindungsstutzen 61, dichten dabei derart gegen das Innere der Verbindungsöffnungen 1011 ab, dass die durch den Verbindungsstutzen 61 in das Adapterteil 10 strömende Betriebsmittel 5 nicht im Inneren des Adapterteils 10 austreten und so vollständig in die Zuleitungen 41 im Betriebszustand weitergeleitet werden.

Es versteht sich von selbst, dass die Dichtringe 12 auch oder zusätzlich in einer geeignet ausgestalteten Ausnehmung in der Verbindungsöffnung 1011 vorgesehen sein können, und dass je nach Anforderung, die dichtende Verbindung auch anders ausgestaltet sein kann, z.B. dass die Dichtringe 12 nicht am Umfang des Verbindungsstutzens 61 anliegen, sondern z.B. an der Stirnseite dichtend anliegen oder andere geeignete Dichtmassnahmen vorgesehen sind.

Ausserdem versteht es sich von selbst, dass je nachdem welche Betriebsmittel 5 über die Versorgungsleitung 7 bzw. über die Zuleitung 4 geführt werden müssen, z.B. Betriebsgase 5, Betriebsflüssigkeiten 5 oder elektrische Energie 5, jeweils eventuell verschiedene geeignete Dichtungsmassnahmen vorgenommen werden müssen, die an das Betriebsmittel als solches und an die physikalischen und chemischen Randbedingungen, wie unter anderem Druck, Temperatur, chemische Eigenschaften, abrasive Eigenschaften, zum Beispiel wenn ein Spritzpulver 5 transportiert wird, angepasst sein müssen. Auch müssen eventuell zusätzlich geeignete Isolierungsmassnahmen gegen Temperatur oder elektrische Ströme bzw. elektrische Spannungen ergriffen werden. Alle entsprechend notwendigen Dichtungs- und Isoliermassnahmen sind dem Fachmann bestens bekannt und brauchen hier nicht näher im Detail erläutert zu werden.

Durch die Erfindung wird somit erstmals eine Vorrichtungen zum thermischen Spritzen bereitgestellt, bei der beim Austausch bzw. beim Einbau einer anderen Spritzpistole nicht alle Versorgungsleitungen einzeln, unter Verwendung unterschiedlicher Anschlüsse, mit verschiedenen Dichtungseinrichtungen usw. an die Spritzpistole angeschlossen werden müssen.

Das heisst, alle einzelnen Teile der Zuleitung (elektrische Zuleitung, Kühlwasser, Betriebsgase, Zuleitungen für Spritzwerkstoffe usw.) können mit einer einzigen Adaptervorrichtung umfassend ein Adapterteil, ein Basisteil und eine lösbare Kupplungseinrichtung in einem einzigen Arbeitsschritt gleichzeitig angeschlossen bzw. getrennt werden. Dabei ist es in speziellen Fällen eventuell zweckmässig, in einer einzigen Vorrichtung zum thermischen Spritzen mehrere Adaptervorrichtungen aus Adapterteil und Basisteil parallel einzusetzen.

Dadurch entfällt das enorm zeitaufwändige montieren bzw. demontieren mit verschiedenen Werkzeugen.

Ein mindestens ebenso bedeutender Fortschritt besteht darin, dass durch die Erfindung die Flexibilität in Bezug auf die einsetzbaren Typen von Spritzpistolen und / oder Versorgungseinrichtungen deutlich verbessert wird, d.h. dass ohne aufwändige Umbauarbeiten bei einer gegeben Versorgungseinheit nicht nur ein und derselbe Spritzpistolentyp verwendbar ist, da die entsprechenden Anschlussstücke mit Dichtungen usw. je nach verwendeter Spritzpistole und / oder Versorgungseinheit verschieden sind, so dass die Anschlussstücke der Versorgungsleitungen an den Schnittstellen zwischen Versorgungseinheit und Spritzpistole nicht aufeinander passen, sondern bequem ganz verschiedene Typen von Spritzpistolen gegeneinander ausgetauscht werden können. Es ist dabei ohne weiteres möglich sogenannte "Multifunktionsadapter" einzusetzen, an die Zuleitungen verschiedener Arten von Spritzpistolen (Plasmabrenner, HVOF-Brenner, Draht- oder Pulver-Flammspritzpistolen usw.) gleichzeitig oder abwechselnd angeschlossen werden können.

Dabei kann die Flexibiltät und die Vereinfachung beim Wechseln der Spritzpistole zusätzlich noch dadurch erhöht werden, dass die Spritzpistole selbst mit einer Schnellkupplung, z.B. mit einem Bajonettanschluss, einem Exzenterheber oder einer Schnellverschraubung, die von Hand lösbar ist, an einem Roboterarm oder einer anderen geeigneten Halterung, wie z.B. an einem separaten Halter oder einer Wand einer Beschichtungskabine befestigt ist.

## Patentansprüche

1. Vorrichtung zum thermischen Spritzen, umfassend eine Spritzpistole (2) mit einem Brenner (3), wobei der Spritzpistole (2) über eine Zuleitung (4) ein Betriebsmittel (5) zuführbar ist, und ein Basisteil (6), das über eine Versorgungsleitung (7) mit einer Versorgungseinheit (8) für das Betriebsmittel (5) in Verbindung steht, wobei eine lösbare Kupplungseinrichtung (9) vorgesehen ist, und die Zuleitung (4) ein Adapterteil (10) umfasst, so dass das Adapterteil (10) mittels der lösbaren Kupplungseinrichtung (9) mit dem Basisteil (6) verbindbar ist, **dadurch gekennzeichnet, dass** die Zuleitung (4) und /oder die Versorgungsleitung (7) eine elektrische Zuleitung zur Versorgung der Spritzpistole (2) mit elektrischer Energie (5) und eine Kühlleitung zur Versorgung der Spritzpistole (2) mit einem Kühlmittel (5) umfasst.

2. Vorrichtung nach Anspruch 1, wobei die lösbare Kupplungseinrichtung (9) ein Exzenterheber (9), ein Bajonettverschluss (9) oder eine Verschraubung (9) ist.

3. Vorrichtung nach einem der vorangehenden Ansprüche, wobei der Brenner (3) ein Plasmabrenner (3) ist.

4. Vorrichtung nach einem der vorangehenden Ansprüche, wobei die Spritzpistole (2) eine Spritzpistole zum Flammspritzen, zum Hochgeschwindigkeits Flammspritzen, zum Lichtbogenspritzen oder zum Flammschockspritzen ist.

5. Vorrichtung nach einem der vorangehenden Ansprüche, wobei die Zuleitung (4) und / oder die Versorgungsleitung (7) eine Gaszuführung zur Versorgung der Spritzpistole (2) mit einem Betriebsgas (5) umfasst.

6. Vorrichtung nach einem der vorangehenden Ansprüche, wobei die Zuleitung (4) und / oder die Versorgungsleitung (7) eine Spritzmittelzuführung zur Zuführung von Spritzpulver (5) und/ oder einem Spritzdraht (5) umfasst.

7. Vorrichtung nach einem der vorangehenden Ansprüche, wobei ein Sensor zur Messung eines Betriebsparameters und / oder ein Ansteuerelement zur Steuerung und / oder Regelung eines Betriebsparameters vorgesehen ist.

8. Vorrichtung nach einem der vorangehenden Ansprüche, wobei die Zuleitung (4) und / oder die Versorgungsleitung (7) eine Sensorleitung für den Sensor und / oder eine Ansteuerleitung für das Ansteuerelement umfasst.

## Claims

1. A device for thermal spraying including a spray gun (2) with a torch (3), wherein an operating medium (5) can be supplied to the spray gun (2) via a feed line (4), and a base part (6) which is in communication with a supply unit (8) for the operating medium (5) via a supply line (7), wherein a releasable coupling device (9) is provided and the feed line (4) includes an adapter part (10) such that the adapter part (10) can be connected to the base part (6) by means of the releasable coupling device (9), **characterised in that** the feed line (4) and/or the supply line (7) includes/include an electrical feed line for the supply of the spray gun (2) with electrical energy (5) and a cooling line for the supply of the spray gun (2) with a coolant (5).

2. A device in accordance with claim 1, wherein the releasable coupling device (9) is an eccentric catch (9), a bayonet connector (9) or a screw connection (9).

3. A device in accordance with any one of the preceding claims, wherein the torch (3) is a plasma torch (3).

4. A device in accordance with any one of the preceding claims, wherein the spray gun (2) is a spray gun for flame spraying, for high velocity flame spraying, for arc spraying or for flame shock spraying.

5. A device in accordance with any one of the preceding claims, wherein the feed line (4) and/or the supply line (7) includes a gas supply for the supply of the spray gun (2) with an operating gas (5).

6. A device in accordance with any one of the preceding claims, wherein the feed line (4) and/or the supply line (7) includes a spray means supply for the supply of spray powder (5) and/or of a spray wire (5).

7. A device in accordance with any one of the preceding claims, wherein a sensor is provided for the measurement of an operating parameter and/or a control element is provided for the control and/or regulation of an operating parameter.

8. A device in accordance with any one of the preceding claims, wherein the feed line (4) and/or the supply line (7) includes a sensor lead for the sensor and/or a control line for the control element.

## Revendications

1. Dispositif pour le revêtement thermique, comprenant un pistolet pulvérisateur (2) avec un chalumeau (3), un agent de service (5) pouvant être amené au pistolet pulvérisateur (2) par une arrivée (4), et une partie de base (6), qui est en liaison par une conduite d'alimentation (7) à une unité d'alimentation (8) pour l'agent de service (5), un dispositif d'accouplement (9) détachable étant prévu, et l'arrivée (4) comportant une partie d'adaptation (10), de sorte que la partie d'adaptation (10) peut être reliée au moyen du dispositif d'accouplement (9) amovible à la partie de base (6), **caractérisé en ce que** l'arrivée (4) et/ou la conduite d'alimentation (7) comporte(nt) une arrivée électrique pour l'alimentation du pistolet pulvérisateur (2) avec de l'énergie électrique (5) et une conduite de réfrigération pour l'alimentation du pistolet pulvérisateur (2) avec un agent réfrigérant (5).

2. Dispositif selon la revendication 1, le dispositif d'accouplement (9) amovible étant un élévateur à excentrique (9), une fermeture à baïonnette (9) ou un assemblage vissé (9).

3. Dispositif selon l'une quelconque des revendications précédentes, le chalumeau (3) étant un chalumeau à plasma (3).

4. Dispositif selon l'une quelconque des revendications précédentes, le pistolet pulvérisateur (2) étant un pistolet pulvérisateur pour la projection à flamme, pour la projection à flamme à haute vitesse, pour la projection à arc ou pour la projection à détonation.

5. Dispositif selon l'une quelconque des revendications précédentes, l'arrivée (4) et/ou la conduite d'alimentation (7) comportant une arrivée de gaz pour l'alimentation du pistolet pulvérisateur (2) avec un gaz de service (5).

6. Dispositif selon l'une quelconque des revendications précédentes, l'arrivée (4) et/ou la conduite d'alimentation (7) comportant une arrivée d'agent à projeter pour l'arrivée de poudre à projeter (5) et/ou pour l'arrivée d'un fil à projeter (5).

7. Dispositif selon l'une quelconque des revendications précédentes, un capteur étant prévu pour la mesure d'un paramètre de service et/ou un élément d'actionnement étant prévu pour la commande et/ou le réglage d'un paramètre de service.

8. Dispositif selon l'une quelconque des revendications précédentes, l'arrivée (4) et/ou la conduite d'alimentation (7) comportant une conduite de détection pour le capteur et/ou une conduite d'activation pour l'élément d'activation.
